Europäisches Patentamt

European Patent Office

Office européen des brevets

(11) Veröffentlichungsnummer: **0 011 319**
**A1**

(12) **EUROPÄISCHE PATENTANMELDUNG**

(21) Anmeldenummer: **79200557.1**

(22) Anmeldetag: **02.10.79**

(51) Int. Cl.³: **B 01 D 23/18**
**C 02 F 1/52**

(30) Priorität: **28.10.78 DE 2847076**

(43) Veröffentlichungstag der Anmeldung:
**28.05.80 Patentblatt 80/11**

(84) Benannte Vertragsstaaten:
**DE FR GB IT**

(71) Anmelder: **METALLGESELLSCHAFT Aktiengesellschaft**
**Reuterweg 14**
**D-6000 Frankfurt am Main 1(DE)**

(72) Erfinder: **Preiss, Siegfried, Ing.-Grad.**
**Ostring 41**
**D-6231 Schwalbach(DE)**

(72) Erfinder: **Bay, Josef, Ing.-Grad.**
**Westerwaldstrasse 5**
**D-6000 Frankfurt/Main 60(DE)**

(72) Erfinder: **Brand, Bruno**
**Unter den Weingärten 4**
**D-6239 Kriftel(DE)**

(72) Erfinder: **Eschenbach, Carl-Adolf**
**Hainerbergweg 8**
**D-6240 Königstein(DE)**

(74) Vertreter: **Fischer, Ernst, Dr.**
**Reuterweg 14**
**D-6000 Frankfurt am Main 1(DE)**

(54) **Filteranlage.**

(57) Filteranlage mit einem Filterboden (4) zum Tragen des Filtermaterials (2,3) und zum Verteilen von Spülgas in das Filtermaterial hinein, wobei die Unterseite des Filterbodens nach unten offene Kammern (12) aufweist und jede Kammer durch den Filterboden hindurchgeführte Düsen (5) besitzt. Das untere Ende jeder Düse ragt in die Kammer hinein und zu jeder Kammer gehört mindestens eine Zuleitung (11) für Spülgas. Der Filterboden kann aus gegossenem Beton bestehen und seine Unterseite kann durch eine verlorene Schalung gebildet sein.

Fig.1

EP 0 011 319 A1

METALLGESELLSCHAFT AG          Frankfurt am Main 27.10.1978
    Nr. 8340 LT                -WGN/HSZ-


                        Filteranlage


Die Erfindung betrifft eine Filteranlage zur Filtration von
Flüssigkeiten, insbesondere Wasser und Abwasser, mit einem
Filterboden zum Tragen des Filtermaterials und zum Verteilen
von Spülgas in das Filtermaterial hinein.

Der Erfindung liegt die Aufgabe zugrunde, beim Spülen des
Filtermaterials das Spülgas möglichst gleichmäßig in das
Filtermaterial hinein zu verteilen. Erfindungsgemäß wird dies
dadurch gelöst, daß die Unterseite des Filterbodens nach unten
offene Kammern aufweist, jede Kammer durch den Filterboden
hindurchgeführte Düsen besitzt, wobei das untere Ende jeder
Düse in die Kammer hineinragt, und die Kammern mit mindestens
einer Zuleitung für Spülgas ausgestattet sind. Auf diese Weise
kann sich beim Spülvorgang in einer jeden Kammer zunächst das
Spülgas gleichmäßig verteilen, wobei noch vorhandene filtrierte
Flüssigkeit vom oberen Ende einer jeden Kammer nach unten verdrängt wird. Sobald das Polster an Spülgas eine genügende Dicke
erreicht hat, kann es in die Düsen der Kammer eintreten, was bei
allen Düsen der Kammer gleichzeitig geschieht. Das Spülgas tritt
deshalb auch aus allen Düsen gleichzeitig in das Filtermaterial
ein und ungleichmäßige Verwirbelungen werden vermieden.

Als Spülgas verwendet man üblicherweise Luft oder ein Luft-Wasser-Gemisch. Das Filtermaterial kann aus beliebigem körnigem Material, z.B. Aktivkohle, Sand oder Bims bestehen. Auch ein mehrschichtiger Aufbau der Filtermasse ist möglich. Zwischen dem Filterboden und dem eigentlichen Filtermaterial kann auch eine Stützschicht aus grobkörnigem Material, etwa Kieselsteinen, vorgesehen sein.

Die Kammern können beliebig geformt sein, wobei es im Prinzip darauf ankommt, daß sie oben geschlossen sind, eine oder mehrere Düsen aufweisen und das Spülgas von unten frei in die Kammer strömen kann. Günstig für die Herstellung des Filterbodens sind Kammern, die als nach unten offene Rinnen ausgebildet sind. Zweckmäßigerweise wird jeder Kammer mindestens eine Zuleitung für Spülgas zugeordnet. Man kann die Kammern auch durch Röhren oder Querkammern miteinander verbinden. Dadurch bildet sich schnell ein gleichmäßiges Gaspolster unter dem ganzen Filterboden aus, bevor das Gas in die Düsen eintritt. Die Zahl der Zuleitungen für Spülgas läßt sich dadurch verringern.

Um die gleichmäßige Verteilung des Spülgases noch weiter zu verbessern, ist es zweckmäßig, die Zuleitungen für das Gas von einer unter dem Filterboden angeordneten Sammelleitung ausgehen zu lassen und jede Zuleitung mit ihrem unteren Ende in die Sammelleitung hineinragend auszubilden. Auf diese Weise entsteht bei der Zufuhr des Spülgases von außen bereits in der Sammelleitung eine Vergleichmäßigung der Austrittsmengen an Gas durch jede Zuleitung in die zugehörige Kammer.

Beim Bau einer Filteranlage ist es vorteilhaft, daß man den Filterboden einstückig aus gegossenem Beton herstellt und seine profilierte Unterseite, in welcher die Kammern ausgebildet sind, durch eine entsprechend geformte Schalung erzeugt. Die Schalung kann als verlorene Schalung im Filterboden verbleiben.

0011319

In der Zeichnung ist eine Ausgestaltungsmöglichkeit der erfindungsgemäßen Filteranlage schematisch dargestellt. Es zeigt:

Fig. 1   einen Längsschnitt durch die Filteranlage,

Fig. 2   einen Längsschnitt durch die Filteranlage der Fig. 1, geschnitten in Richtung der Linie II-II   und

Fig. 3   einen vergrößerten Ausschnitt aus dem Filterboden der Fig. 1, geschnitten in Richtung der Linie III-III.

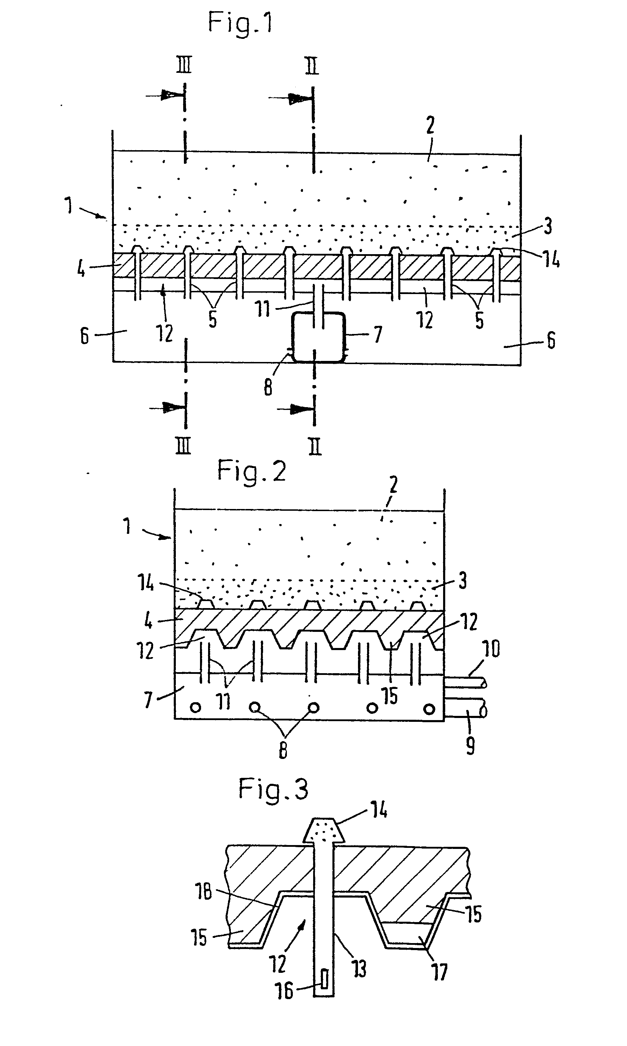

Die Filteranlage der Fig. 1 und 2 weist ein Filtergehäuse 1 auf, welches offen oder auch geschlossen sein kann. Im Filtergehäuse 1 befindet sich eine Filterschicht 2, die auf einer Stützschicht 3 ruht. Die Filterschicht und die Stützschicht werden vom Filterboden 4 getragen.

Der Filterboden 4 weist zahlreiche Düsen 5 auf, wodurch der Filterboden durchlässig für die von oben nach unten fließende, zu filtrierende Flüssigkeit wird. Die Düsen 5 dienen gleichzeitig auch dazu, wenn das Filtermaterial gespült werden soll, das Spülmedium von unten nach oben durch den Filterboden 4 zu führen und gleichmäßig in die Stützschicht 3 und Filterschicht 2 hinein zu verteilen.

Unter dem Filterboden 4 befindet sich ein Verteilungsraum 6, der im Betrieb der Filteranlage mit filtrierter Flüssigkeit gefüllt ist. Über eine Sammelleitung 7, die zahlreiche Öffnun- gen 8 besitzt, wird die filtrierte Flüssigkeit abgeleitet und nach außen über die Leitung 9 (Fig. 2) abgezogen.

Soll das Filtermaterial, z.B. mittels Luft, gespült werden, drückt man die Luft durch die Leitung 10 in die Sammelleitung 7 und verdrängt einen Teil der dort vorhandenen Flüssigkeit durch die Öffnungen 8. Die Luft in der Sammelleitung 7 bildet zunächst ein Luftpolster, das noch nicht entweichen kann. Die Sammelleitung 7 besitzt nämlich im oberen Bereich zahlreiche Rohrstücke 11, die aber mit ihrem unteren Ende ein Stück in die Sammelleitung 7 hinein vorstehen, wie es Fig. 1 und 2 zu entnehmen ist. Erst wenn das Luftpolster eine genügende Höhe erreicht hat, um das untere, freie Ende der Rohrstücke zu erreichen, kann Luft aus der Sammelleitung 7 austreten und zum Filterboden 4 strömen. Dies geschieht gleichzeitig durch alle Rohrstücke 11 der Sammelleitung 7.

Die Unterseite des Filterbodens 4 ist so ausgebildet, daß die Spülluft durch alle Düsen 5 gleichzeitig und gleichmäßig nach oben strömt. Wie Fig. 2 und 3 zeigen, sind an der Unterseite des Filterbodens 4 parallellaufende Rinnen 12 ausgebildet, die nach unten offen sind. Jede Rinne 12 besitzt gleichartige Düsen 5, von denen eine in Fig. 3 vergrößert dargestellt ist. Die Düse 5 besteht aus einem Rohr 13 und weist einen flüssigkeitsdurchlässigen, perforierten Kopf 14 auf. Der Kopf 14 befindet sich in der Stützschicht 3 und das Rohr 13 reicht vom Kopf 14 bis in den Verteilungsraum 6. Das untere, freie Ende des Rohres 13 liegt tiefer als die Rippen 15, welche die Rinnen 12 voneinander trennen. Durch diese Ausbildung wird dafür gesorgt, daß sich zunächst jede Rinne 12 mit einem Polster aus Spülluft füllt und anschließend ein geschlossenes Luftpolster über die gesamte Unterseite des Filterbodens 4 entsteht, bevor die Spülluft vom unteren Ende eines jeden Rohres 13 aus durch den Filterboden 4 hindurch nach oben strömt. Das Rohr 13 kann am unteren Ende auch noch Schlitze 16 aufweisen, wie Fig. 3 zeigt. Benachbarte Rinnen 12 können durch Verbindungsleitungen oder durch nach unten offene Querrinnen 17 miteinander verbunden sein, wie das in Fig. 3 angedeutet ist.

Wird zur Spülung des Filtermaterials ein Luft-Wasser-Gemisch verwendet, so leitet man diese Medien ebenfalls zunächst in die Sammelleitung 7; auch eine Spülung nur mit Wasser ist möglich. Die Ausbildung der Sammelleitung 7 und des Filterbodens 4 sorgt auch in diesen Fällen für eine gleichmäßige Verteilung der Spülmedien in die Filterschicht hinein.

0011319

Für den Bau der Filteranlage ist es zweckmäßig, wenn man den Filterboden aus Stahlbeton herstellt und in einem Stück gießt. Die profilierte Schalung 18 (Fig. 3) kann als verlorene Schalung im Filterboden bleiben und aus korrosionsgeschütztem Blech hergestellt sein.

0011319

Patentansprüche

1) Filteranlage zur Filtration von Flüssigkeiten, insbesondere Wasser und Abwasser, mit einem Filterboden zum Tragen des Filtermaterials und zum Verteilen von Spülgas in das Filtermaterial hinein, dadurch gekennzeichnet, daß die Unterseite des Filterbodens nach unten offene Kammern aufweist, jede Kammer durch den Filterboden hindurchgeführte Düsen besitzt, wobei das untere Ende jeder Düse in die Kammer hineinragt und die Kammern mit mindestens einer Zuleitung für Spülgas ausgestattet sind.

2) Filteranlage nach Anspruch 1, dadurch gekennzeichnet, daß die Kammern als nach unten offene Rinnen ausgebildet sind.

3) Filteranlage nach Anspruch 1 oder 2, dadurch gekennzeichnet, daß jede Kammer mindestens eine Zuleitung für Spülgas besitzt.

4) Filteranlage nach Anspruch 1 oder einem der folgenden, dadurch gekennzeichnet, daß die Zuleitungen für Spülgas von einer unter dem Filterboden angeordneten Sammelleitungen ausgehen und jede Zuleitung mit ihrem unteren Ende in die Sammelleitung hineinragt.

5) Filteranlage nach Anspruch 1 oder einem der folgenden, dadurch gekennzeichnet, daß die Kammern untereinander verbunden sind.

6) Filteranlage nach Anspruch 1 oder einem der folgenden, dadurch gekennzeichnet, daß der Filterboden einstückig aus gegossenem Beton besteht und seine Unterseite durch eine verlorene Schalung gebildet ist.

Fig.1

Fig.2

Fig.3

Europäisches
Patentamt

**EUROPÄISCHER RECHERCHENBERICHT**

0011319
Nummer der Anmeldung

EP 79 200 557.1

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | US - A - 4 118 322 (HYDROTECHNIC CORP.) <br> * Fig. 2 bis 4 * <br><br> -- <br><br> US - A - 4 096 068 (PEABODY GALION CORP.) <br> * Spalte 2, Zeile 29; Fig. 3, 4 * <br><br> -- <br><br> DE - C - 1 154 792 (SULZER) <br> * Spalte 1, Zeile 40; Fig. 1, 3 * <br><br> -- <br> | 1-5 <br><br><br> 1-4, 6 <br><br><br> 1-4, 6 | B 01 D 23/18 <br> C 02 F 1/52 |
| A | DE - A - 1 536 936 (WIEDERHOLD) <br> * vollständiges Dokument * <br><br> ---- | | |

**RECHERCHIERTE SACHGEBIETE (Int. Cl.3)**

B 01 D 23/18
B 01 D 23/20
B 01 D 23/26
C 02 F 1/52

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 15-02-1980 | KÜHN |

EPA form 1503.1 06.78